# EUROPEAN PATENT APPLICATION

(11) **EP 4 808 081 A1**
(43) Date of publication of application: **16.09.2026**
(21) Application number: 24892702.2
(22) Date of filing: 11.05.2024
(51) Int. Cl.: H04L 65/403

(54) **CONFERENCE CONTROL METHOD AND RELATED DEVICE**

(30) Priority: 21.11.2023 CN 202311563645; 18.02.2024 CN 202410181782
(71) Applicant: Huawei Cloud Computing Technologies Co., Ltd., Gui'an New District, Guizhou 550025 (CN)
(72) Inventor: ZHOU, Xueyi, Guiyang, Guizhou 550025 (CN); LIN, Tianyong, Guiyang, Guizhou 550025 (CN)
(74) Representative: Thun, Clemens
(86) International application number: PCT/CN2024/092552
(87) International publication number: WO 2025/107537

(57) **Abstract**

This application provides a conference control method. The method is applied to a conference control system, and the conference control system includes a conference server and a conference controller. The method includes: The conference server receives a conference control request sent by the conference controller, where the conference control request is used to request to execute a target instruction related to a video conference; the conference server determines at least one hard terminal that has a pairing relationship with the conference controller, where the hard terminal is configured to implement a hardware video conference based on an embedded architecture; and the conference server processes the conference control request, to control the at least one hard terminal to execute the target instruction. In this method, the conference controller is provided in a conference room in which the hard terminal is deployed, and a user can implement various remote conference control functions on the hard terminal via the conference controller without replacing the hard terminal.

## Description

This application claims priority to Chinese Patent Application No. 202311563645.1, filed with the China National Intellectual Property Administration on November 21, 2023 and entitled "HARD TERMINAL CONTROLLER MANAGEMENT METHOD AND APPARATUS", which is incorporated herein by reference in its entirety.

This application claims priority to Chinese Patent Application No. 202410181782.7, filed with the China National Intellectual Property Administration on February 18, 2024, and entitled "CONFERENCE CONTROL METHOD AND RELATED DEVICE", which is incorporated herein by reference in its entirety.

### TECHNICAL FIELD

This application relates to the field of computer technologies, and in particular, to a conference control method and system, a compute device cluster, a computer-readable storage medium, and a computer program product.

### BACKGROUND

With continuous development of computer technologies, video conferencing has emerged. Video conferencing may include a hardware video conference (hardware video conference, HVC), and the HVC is a video conferencing manner based on an embedded architecture. Specifically, a user can implement the hardware video conference through a hard terminal. The hard terminal is usually deployed in a conference room, and the hard terminal may be connected to an external display to project a conference video.

In the hardware video conference, the user can perform an operation of joining the video conference through a hard terminal management portal or a television remote control provided with the hard terminal. After joining the video conference, the user can also control a microphone to be turned on or off through the television remote control provided with the hard terminal. However, operation efficiency of the foregoing conference control manner is low, and it is difficult to implement various conference control functions.

### SUMMARY

This application provides a conference control method. In the method, various remote conference control functions on a hard terminal can be implemented via a conference controller without replacing the hard terminal. This application further provides a conference control system corresponding to the method, a compute device cluster, a computer-readable storage medium, and a computer program product.

According to a first aspect, this application provides a conference control method. The method may be performed by a conference control system, and the conference control system includes a conference server and a conference controller. The conference control system may be a software system. The software system may be deployed in a compute device cluster. The compute device cluster executes program code of the software system, to perform the conference control method in this application. In some examples, the conference control system may be a hardware system. For example, the conference control system may be a compute device cluster having a conference control function. When the hardware system runs, the conference control method in this application is performed. For example, the conference server may be a server having a conference function. The server may be a cloud server, for example, a central server in a central cloud compute cluster, or an edge server in an edge cloud compute cluster. Certainly, the server may alternatively be a server in a local data center. The local data center is a data center directly controlled by a user. For another example, the conference controller may be a compute device having a conference control capability.

Specifically, the conference server may receive a conference control request sent by the conference controller, where the conference control request may be used to request to execute a target instruction related to a video conference. The conference server may determine at least one hard terminal that has a pairing relationship with the conference controller, and the hard terminal may be used to implement a hardware video conference based on an embedded architecture. Then, the conference server may process the conference control request, to control the at least one hard terminal to execute the target instruction.

In the method, the conference controller is provided in a conference room in which a hard terminal is deployed. The conference controller may provide a conference control function, and a user (for example, a conference participant) may send the conference control request via the conference controller. The pairing relationship between the conference controller and the hard terminal in the conference room is established in the conference server, and the conference server may process the conference control request based on the pairing relationship, so that the hard terminal can execute the target instruction related to the video conference. In this way, the user can implement various remote conference control functions on the hard terminal via the conference controller without replacing the hard terminal.

In some possible implementations, the conference controller presents at least one instruction control. In response to a trigger operation performed on a target control in the at least one instruction control, the conference controller may send a conference control request corresponding to the target control, and the conference server may receive the conference control request.

In the method, the conference controller provides the instruction control, and different instruction controls correspond to different instructions related to the video conference. The conference participant may quickly trigger, in a manner of triggering the instruction control, the conference controller to generate the conference control request. In this way, conference control efficiency in the video conference is improved.

In some possible implementations, the pairing relationship between the conference controller and the hard terminal is established according to the following steps: The conference server generates first pairing information of the hard terminal. Then, the conference server receives a pairing request sent by the conference controller, where the pairing request carries second pairing information. In response to the first pairing information being the same as the second pairing information, the conference server may establish the pairing relationship between the conference controller and the hard terminal.

In the method, the first pairing information generated by the conference server is compared with the second pairing information carried in the pairing request, to implement pairing between the conference controller and the hard terminal, thereby avoiding a pairing error.

In some possible implementations, after the pairing relationship between the conference controller and the hard terminal is established, the conference server may receive a conference information subscription request sent by the conference controller. Then, the conference server may establish a conference information subscription link with the conference controller based on the pairing relationship between the conference controller and the hard terminal, where the conference information subscription link is used to transmit conference information of the hard terminal.

In the method, the conference controller may present the conference information of the hard terminal by establishing the conference information subscription link, and a user (for example, a conference participant) may intuitively view and learn of the conference information of the hard terminal in a conference room via the conference controller, thereby implementing pushing of the conference information of the hard terminal to the conference controller.

In some possible implementations, the conference server may send the conference information of the hard terminal to the conference controller through the conference information subscription link; or in response to a change of the conference information of the hard terminal, the conference server may update the conference information of the hard terminal to the conference controller through the conference information subscription link.

In the method, the conference server may send the conference information of the hard terminal to the conference controller, or update the conference information of the hard terminal to the conference controller when the conference information of the hard terminal changes, so as to push the conference information to the conference controller in time.

In some possible implementations, the conference control request is used to request to join the video conference. The conference server may generate a conference joining request for the at least one hard terminal. In response to the conference server receiving a conference joining response from the at least one hard terminal, the conference server may establish a control link with the conference controller, where the control link is used to control the at least one hard terminal to execute the target instruction in a video conference process.

In the method, the conference controller may control the hard terminal to join the video conference. The conference server may establish the control link between the conference server and the conference controller, and may implement remote control of the hard terminal through the control link in the video conference process.

In some possible implementations, in the video conference process, the conference controller may send the target instruction to the conference server through the control link, for example, an instruction for muting a hard terminal, an instruction for opening a video image of a hard terminal, an instruction for inviting another conference participant, or an instruction for adjusting a conference view. The conference server controls, by processing the target instruction, the at least one hard terminal to execute the target instruction, to implement various conference control functions.

In some possible implementations, the at least one hard terminal generates a conference joining response through a connector; or the conference server forwards the conference joining request for the at least one hard terminal to the at least one hard terminal through an access gateway, and in response to the at least one hard terminal answering the conference joining request, the at least one hard terminal generates a conference joining response. In the method, the hard terminal may generate the conference joining response based on the connector or the access gateway, thereby enriching a conference joining manner of the hard terminal.

In some possible implementations, the conference control request is used to request to share a screen in the video conference. The conference server may generate first screen sharing information corresponding to the at least one hard terminal, and send the first screen sharing information to the conference controller, to enable the conference controller to present the first screen sharing information. Then, the conference server may receive second screen sharing information sent by a conference client, and in response to the first screen sharing information being the same as the second screen sharing information, the conference server may establish a shared link with the conference client, where the conference client is deployed on a device of a conference participant in the video conference. The conference server receives a data stream sent by the conference client through the shared link, and sends the data stream to the at least one hard terminal, to enable the at least one hard terminal to play the data stream.

In the method, the shared screen information is presented in the conference controller, and the conference client may transmit the data stream to the hard terminal through the shared link obtained between the conference server and the conference client. In this way, screen sharing is implemented in a conference room in which the hard terminal is deployed without depending on a projection capability of the hard terminal.

In some possible implementations, in a specified period, the pairing relationship between the conference controller and the hard terminal may be kept alive, and when the user opens the conference controller, pairing does not need to be performed again.

According to a second aspect, this application provides a conference control system. The system includes:
a conference controller, configured to send a conference control request, where the conference control request is used to request to execute a target instruction related to a video conference; and
a conference server, configured to: receive the conference control request, and determine at least one hard terminal that has a pairing relationship with the conference controller, where the hard terminal is configured to implement a hardware video conference based on an embedded architecture; and
the conference server is further configured to process the conference control request, to control the at least one hard terminal to execute the target instruction.

In some possible implementations, the conference controller presents at least one instruction control, and the conference controller is specifically configured to:
send, in response to a trigger operation performed on a target control in the at least one instruction control, a conference control request corresponding to the target control.

In some possible implementations, the conference server is further configured to:
generate first pairing information of the hard terminal;
receive a pairing request sent by the conference controller, where the pairing request carries second pairing information; and
in response to the first pairing information being the same as the second pairing information, establish the pairing relationship between the conference controller and the hard terminal.

In some possible implementations, the conference server is further configured to:
receive a conference information subscription request sent by the conference controller; and
establish a conference information subscription link with the conference controller based on the pairing relationship between the conference controller and the hard terminal, where the conference information subscription link is used to transmit conference information of the hard terminal.

In some possible implementations, the conference server is further configured to:
send the conference information of the hard terminal to the conference controller through the conference information subscription link; or
in response to a change of the conference information of the hard terminal, update the conference information of the hard terminal to the conference controller through the conference information subscription link.

In some possible implementations, the conference control request is used to request to join the video conference, and the conference server is specifically configured to:
generate a conference joining request for the at least one hard terminal; and
in response to receiving a conference joining response from the at least one hard terminal, establish a control link with the conference controller, where the control link is used to control the at least one hard terminal to execute the target instruction in a video conference process.

In some possible implementations, the at least one hard terminal is further configured to:
generate a conference joining response through a connector; or
generate the conference joining response in response to the at least one hard terminal answering the conference joining request, where the conference server forwards the conference joining request for the at least one hard terminal to the at least one hard terminal through an access gateway.

In some possible implementations, the conference control request is used to request to share a screen in the video conference, and the conference server is specifically configured to:
generate first screen sharing information corresponding to the at least one hard terminal, and send the first screen sharing information to the conference controller, to enable the conference controller to present the first screen sharing information;
receive second screen sharing information sent by a conference client, and in response to the first screen sharing information being the same as the second screen sharing information, establish a shared link with the conference client, where the conference client is deployed on a device of a conference participant in the video conference; and
receive a data stream sent by the conference client through the shared link, and send the data stream to the at least one hard terminal, to enable the at least one hard terminal to play the data stream.

According to a third aspect, this application provides a compute device cluster. The compute device cluster includes at least one compute device, and the at least one compute device includes at least one processor and at least one memory. The at least one processor and the at least one memory communicate with each other. The at least one processor is configured to execute instructions stored in the at least one memory, to enable the compute device or the compute device cluster to perform the conference control method according to any one of the first aspect or the implementations of the first aspect.

According to a fourth aspect, this application provides a computer-readable storage medium. The computer-readable storage medium stores instructions, and the instructions instruct a compute device or a compute device cluster to perform the conference control method according to any one of the first aspect or the implementations of the first aspect.

According to a fifth aspect, this application provides a computer program product including instructions. When the computer program product runs on a compute device or a compute device cluster, the compute device or the compute device cluster is enabled to perform the conference control method according to any one of the first aspect or the implementations of the first aspect.

Based on the implementations provided in the foregoing aspects, the implementations in this application may be further combined to provide more implementations.

### BRIEF DESCRIPTION OF DRAWINGS

To describe technical methods in embodiments of this application more clearly, the following briefly describes accompanying drawings used for describing embodiments.
FIG. 1 is a diagram of a hard terminal according to an embodiment of this application;
FIG. 2 is a diagram of an architecture of a hardware video conference system according to an embodiment of this application;
FIG. 3 is a diagram of an architecture of a conference control system according to an embodiment of this application;
FIG. 4 is a schematic flowchart of a conference control method according to an embodiment of this application;
FIG. 5 is a schematic flowchart of establishing a pairing relationship according to an embodiment of this application;
FIG. 6 is a schematic flowchart of generating first pairing information according to an embodiment of this application;
FIG. 7 is a schematic flowchart of pushing conference information of a hard terminal according to an embodiment of this application;
FIG. 8 is a schematic flowchart of scheduling a conference according to an embodiment of this application;
FIG. 9 is a schematic flowchart of joining a video conference according to an embodiment of this application;
FIG. 10 is a schematic flowchart of generating a conference joining response according to an embodiment of this application;
FIG. 11 is a schematic flowchart of sharing a screen according to an embodiment of this application;
FIG. 12A to FIG. 12Q are diagrams of a conference control interface according to an embodiment of this application;
FIG. 13 is a diagram of a structure of a compute device according to an embodiment of this application;
FIG. 14 is a diagram of a structure of a compute device cluster according to an embodiment of this application;
FIG. 15 is a diagram of a structure of another compute device cluster according to an embodiment of this application; and
FIG. 16 is a diagram of a structure of still another compute device cluster according to an embodiment of this application.

### DESCRIPTION OF EMBODIMENTS

The terms "first" and "second" in embodiments of this application are merely intended for description, and shall not be understood as an indication or implication of relative importance or an implicit indication of a quantity of indicated technical features. Therefore, a feature limited by "first" or "second" may explicitly or implicitly include one or more features.

First, some technical terms in this application are described.

A video conference (video conference) is a conference manner in which audio and video signals are transmitted in real time through a network and a communication device, so that conference participants in different places can communicate face to face. Based on different implementations, video conferences may be classified into a hardware video conference and a software video conference, which are separately described below.

The hardware video conference (hardware video conference, HVC) emerged in the 1980s, and is a video conference manner based on an embedded architecture. Specifically, the hardware video conference may be implemented through a hardware video conference system provided by a hardware video conference service provider.

The hardware video conference system includes a hard terminal and a multipoint control unit (multipoint control unit, MCU), and mainly uses a session initiation protocol (session initiation protocol, SIP) or an audio video protocol (audio video protocol, such as H.323) with good compatibility for conference communication. The MCU may be understood as a conference server, and is usually deployed in a network center. The MCU may be configured to converge, allocate, and switch signals of a plurality of hard terminals. For example, the MCU may mix and switch audio and video data of the plurality of hard terminals, and broadcast and route data information of the plurality of hard terminals.

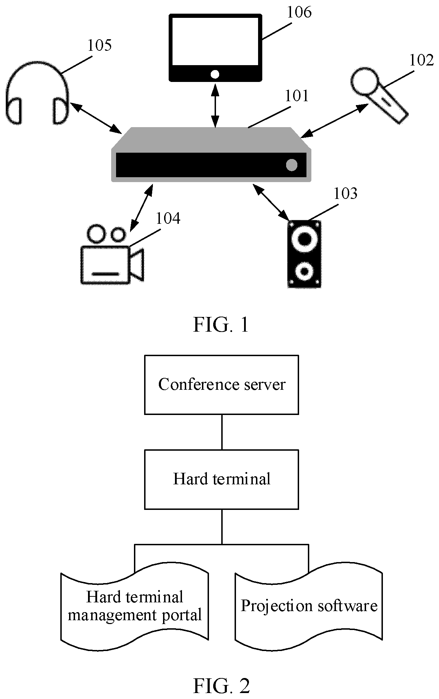

The hard terminal is usually deployed in a conference room, and a user (for example, a conference participant) may implement the hardware video conference in the conference room through the hard terminal. FIG. 1 is a diagram of a hard terminal. The hard terminal 101 may be connected to an audio/video device. For example, the hard terminal 101 may be connected to a microphone 102, a speaker 103, a camera 104, a headset 105, and an external display 106. In a hardware video conference process, a conference participant may speak through the microphone 102, listen to audio content of the video conference through the speaker 103 or the headset 105, display an image of the conference participant through the camera 104, and watch video content of the video conference through the external display 106.

The hardware video conference system may further include a television remote control provided with the hard terminal. In the hardware video conference, the conference participant may perform conference control by using the television remote control. The conference control is control of functions related to the video conference.

FIG. 2 is a diagram of an architecture of a hardware video conference system. In a conventional conference room in which a hard terminal is deployed, the hard terminal may access a conference server, so that a conference participant can perform a hardware video conference in the conference room.

In some examples, the conference participant may perform an operation of joining the video conference by using the television remote control. Specifically, the hardware video conference system may provide a hard terminal management portal (portal), and display the hard terminal management portal on an external display connected to the hard terminal. The conference participant may access, by using the television remote control, a conference management menu of the hard terminal management portal, and input a conference identifier (identifier, ID) and a conference password, to trigger the hard terminal to join the video conference.

In some other examples, the conference participant may perform a control operation on a microphone by using the television remote control. Specifically, through the television remote control, the conference participant may input "#7" to turn on the microphone and input "#8" to turn off the microphone. For a hard terminal having a projection capability, the conference participant may also implement a local projection function through a projection software built in the hardware video conference system.

With development of the Internet, the software video conference (software video conference) emerges. The software video conference, also referred to as a cloud video conference, is a video conference manner based on a personal computer (personal computer, PC) architecture, and has characteristics such as high efficiency, convenience, and low costs. Specifically, the software video conference may be implemented through video conference software provided by a software video conference service provider.

The video conference software supports access from a plurality of terminals. In some examples, the video conference software may be deployed in a mobile terminal. For example, the video conference software may be deployed in a mobile terminal like a personal computer, a mobile phone, or a tablet computer. The conference participant may join the software video conference by running the video conference software in the mobile terminal. In some other examples, the video conference software may be deployed in an intelligent terminal. For example, the video conference software may be deployed in a smart large screen or an intelligent large screen. The conference participant may join the software video conference in a conference room by deploying the intelligent terminal in the conference room.

The video conference software provided by the software video conference service provider supports various conference control functions. Specifically, in a development phase of the video conference software, a developer of the software video conference service provider may develop different types of conference control functions, for example, a function of joining a video conference, a function of inviting another user to participate in a video conference, a function of modifying a participant name in a video conference, a function of turning on or turning off a camera, a function of sharing a screen in a video conference, a function of switching a picture view in a video conference, and a function of choosing to see conference participants in a video conference.

In this way, the conference participant may perform conference control in the video conference through the mobile terminal or the intelligent terminal on which video conference software is deployed. For example, the conference participant may implement efficient and various conference control in a plurality of manners, for example, control the mobile terminal via a mouse or a keyboard, touch the intelligent terminal, and perform voice interaction with the intelligent terminal.

It can be learned from the foregoing description that, when providing the hardware video conference system, the hardware video conference service provider provides only a few simple conference control functions. In addition, because the hardware video conference system does not include the video conference software, it is difficult for the hardware video conference service provider to add a supported conference control function through software upgrade. Consequently, a conference control capability in a conference room in which a hard terminal is deployed is limited. In addition, because the hardware video conference appeared earlier and the hardware video conference is older, the conference participant needs to use a television remote control provided with the hard terminal, to implement the foregoing few simple conference control functions. Compared with a manner in the software video conference in which a mouse and a keyboard are used to control a mobile terminal, or touch or voice interaction is used to control an intelligent terminal to perform conference control, in the hardware video conference, interaction flexibility is poorer, and it is difficult to implement efficient and convenient conference control.

Generally, a user (for example, an enterprise or a company) who has purchased the hardware video conference system needs to replace the hardware video conference system and purchase an intelligent terminal (for example, a smart large screen) on which the video conference software is deployed, to implement various conference control in the conference room. However, because the hardware video conference system is expensive, costs of the foregoing manner are high.

In view of this, this application provides a conference control method. The method may be performed by a conference control system, and the conference control system includes a conference server and a conference controller. The conference control system may be a software system. The software system may be deployed in a compute device cluster. The compute device cluster executes program code of the software system, to perform the conference control method in this application. In some examples, the conference control system may be a hardware system. For example, the conference control system may be a compute device cluster having a conference control function. When the hardware system runs, the conference control method in this application is performed. For example, the conference server may be a server having a conference function. The server may be a cloud server, for example, a central server in a central cloud compute cluster, or an edge server in an edge cloud compute cluster. Certainly, the server may alternatively be a server in a local data center. The local data center is a data center directly controlled by a user. For another example, the conference controller may be a compute device having a conference control capability.

Specifically, the conference server may receive a conference control request sent by the conference controller, where the conference control request may be used to request to execute a target instruction related to a video conference. The conference server may determine at least one hard terminal that has a pairing relationship with the conference controller, and the hard terminal may be used to implement a hardware video conference based on an embedded architecture. Then, the conference server may process the conference control request, to control the at least one hard terminal to execute the target instruction.

In the method, the conference controller is provided in a conference room in which the hard terminal is deployed. The conference controller may provide a conference control function, and a user (for example, a conference participant) may send the conference control request via the conference controller. The pairing relationship between the conference controller and the hard terminal in the conference room is established in the conference server, and the conference server may process the conference control request based on the pairing relationship, so that the hard terminal can execute the target instruction related to the video conference. In this way, the user can implement various remote conference control functions on the hard terminal via the conference controller without replacing the hard terminal.

To make technical solutions of this application clearer and easier to understand, the following describes a system architecture of this application with reference to accompanying drawings.

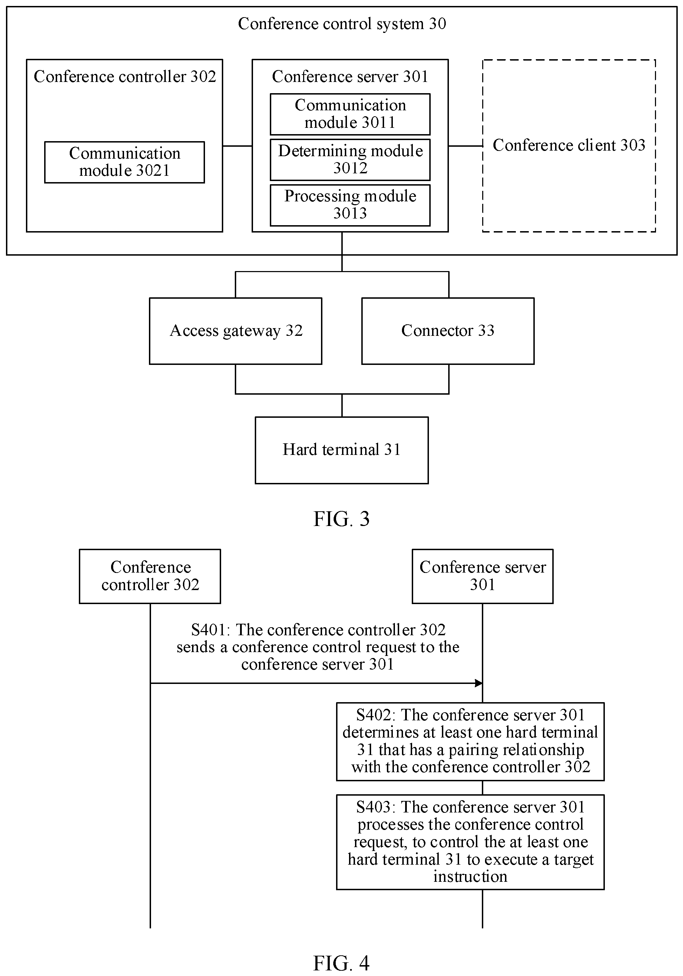

FIG. 3 is a diagram of an architecture of a conference control system. The conference control system 30 includes a conference server 301 and a conference controller 302. Specifically, the conference server 301 can communicate with the conference controller 302. Based on different forms of the conference server 301, a communication manner between the conference server 301 and the conference controller 302 may be different. In some embodiments, the conference server 301 is a server in a local data center, and the conference server 301 may communicate with the conference controller 302 through a local area network. In some other embodiments, the conference server 301 may be a cloud server, and the conference server 301 may communicate with the conference controller 302 through the Internet.

A hard terminal 31 may access the conference server 301. The hard terminal 31 may be a SIP-based or H.323-based hardware terminal, and can implement a hardware video conference based on an embedded architecture. In some embodiments, the hard terminal 31 may be registered with an access gateway 32, and accesses the conference server 301 through the access gateway 32. The access gateway 32 may maintain accessed and registered states of the hard terminal 31 in a form of a service. In addition, considering that the hard terminal 31 is usually based on the SIP or the H.323 protocol, the access gateway 32 may further provide an access protocol conversion function, so that the hard terminal 31 accesses the conference server 301 through the SIP or the H.323 protocol, to implement communication between the hard terminal 31 and the conference server 301.

In some other embodiments, the hard terminal 31 is not registered with the access gateway 32, and the hard terminal 31 may access the conference server 301 through a connector 33. The connector 33 may act as a proxy for the hard terminal 31 to access the conference server 301 in a form of a service when the hard terminal 31 is not registered. Similarly, considering that the hard terminal 31 is usually based on the SIP or the H.323 protocol, the connector 33 may further provide an access protocol conversion function, so that the hard terminal 31 can directly call and access the conference server 301 through the SIP or the H.323 protocol, to implement communication between the hard terminal 31 and the conference server 301.

The conference controller 302, also referred to as a conference terminal controller, a hard terminal controller, or the like, may be provided for a user in a form of software or hardware. For example, the conference controller 302 may be provided for the user in a form of software such as an application or a plug-in. The user may deploy the application or the plug-in in a device in a conference room (for example, a tablet computer or a mobile device in the conference room), to implement remote conference control for the hard terminal. For another example, the conference controller 302 may alternatively be provided for the user in a form of hardware such as a tablet computer (pad) or a mobile device. The user may deploy the tablet computer or the mobile device in a conference room, and the tablet computer or the mobile device has a remote conference control capability for the hard terminal.

The conference server 301 may store a pairing relationship between the conference controller 302 and the hard terminal 31. In some embodiments, the conference server 301 may provide pairing information, and generate a pairing relationship between a conference controller 302 and a hard terminal 31 in a same conference room.

In a video conference, the conference controller 302 may send a conference control request. The conference control request may be used to request to execute a target instruction related to the video conference, for example, used to request to execute an instruction for joining the video conference, and used to request to execute an instruction for sharing a screen in the video conference. Then, the conference server 301 receives the conference control request sent by the conference controller 302, determines at least one hard terminal 31 that has the pairing relationship with the conference controller 302, and processes the conference control request, to control the at least one hard terminal 31 to execute the target instruction.

In this way, because the conference server 301 can communicate with the conference controller 302, and the conference server 301 can communicate with the hard terminal 31, the pairing relationship between the conference controller 302 and the hard terminal 31 is established in the conference server 301, so that the user (for example, a conference participant) can trigger the conference control request via the conference controller 302, and the conference server 301 determines, based on the pairing relationship, a hard terminal 31 that needs to be controlled, and processes the conference control request, thereby implementing effect that the conference controller 302 remotely controls the hard terminal 31 to perform conference control. For example, the conference controller 302 remotely controls the hard terminal 31 to join the video conference, remotely controls the hard terminal 31 to be muted in the video conference, or remotely controls the hard terminal 31 to turn on a camera in the video conference.

In some possible implementations, the conference control system 30 may further include a conference client 303. The conference client 303 may be deployed on a device of the conference participant in the video conference, for example, deployed on a personal computer or a mobile device used by the conference participant. The conference server 301 may generate first screen sharing information corresponding to the hard terminal 31, and send the first screen sharing information to the conference controller 302, to present the first screen sharing information on the conference controller 302. Then, the conference participant may input second screen sharing information into the conference client 303, and send the second screen sharing information to the conference server 301. In this way, the conference server 301 may perform matching between the first screen sharing information and the second screen sharing information. When the first screen sharing information is the same as the second screen sharing information, the conference client 303 may send a data stream to the conference server 301, the conference server 301 forwards the data stream to the hard terminal 31, and the hard terminal 31 may play the data stream, so that screen sharing between the conference client 303 and the hard terminal 31 is implemented. In this way, screen sharing does not need to depend on a projection capability of the hard terminal, and a projection function can also be implemented for a hard terminal that does not have the projection capability.

Based on the conference control system 30 shown in FIG. 3, this application further provides a conference control method. The following describes the conference control method in this application with reference to embodiments.

FIG. 4 is a schematic flowchart of a conference control method. The method includes the following steps.

S401: A conference controller 302 sends a conference control request to a conference server 301.

The conference control request is used to request to execute a target instruction related to a video conference. It may be understood that, in the video conference, a plurality of target instructions related to the video conference are involved, for example, an instruction for a hard terminal 31 to join the video conference, an instruction for the hard terminal 31 to be muted in the video conference, an instruction for the hard terminal 31 to invite another conference participant in the video conference, an instruction for the hard terminal 31 to adjust a view of a conference participant in the video conference, and an instruction for the hard terminal 31 to share a screen in the video conference.

In embodiments of this application, the conference control request may be generated by the conference controller 302, and the conference server 301 may receive the conference control request. In other words, the conference controller 302 is added (for example, a tablet computer or a mobile device on which the conference controller 302 is deployed is added) to a conference room in which the hard terminal 31 is deployed, and a user may generate, via the conference controller 302, a conference control request used to request to execute the target instruction related to the video conference. In this way, a function related to conference control is triggered via the conference controller 302.

In some possible implementations, the conference controller 302 may present at least one instruction control. Specifically, in response to a trigger operation performed on a target control in the at least one instruction control, the conference controller 302 may send a conference control request corresponding to the target control, and the conference server 301 may receive the conference control request.

In other words, the conference controller 302 may provide the at least one instruction control, and different instruction controls may correspond to different instructions related to the video conference. For example, a first instruction control may correspond to the instruction for the hard terminal 31 to join the video conference, and a second instruction control may correspond to the instruction for the hard terminal 31 to be muted in the video conference.

The user (for example, the conference participant) may select the target control from the at least one instruction control of the conference controller 302 based on an actual conference control requirement, and trigger the target control. In this way, the conference controller 302 may send the conference control request corresponding to the target control to the conference server 301. For example, when the conference control requirement of the conference participant is that the hard terminal 31 joins the video conference, the conference participant may trigger the first instruction control, and the conference controller 302 may send, to the conference server 301 in response to the trigger operation, the instruction used to request the hard terminal 31 to join the video conference.

The instruction control is presented on the conference controller 302, so that the conference participant can quickly trigger, in a manner of triggering the instruction control, the conference controller 302 to generate the conference control request. In this way, conference control efficiency in the video conference is improved.

S402: The conference server 301 determines at least one hard terminal 31 that has a pairing relationship with the conference controller 302.

The hard terminal 31 may be configured to implement a hardware video conference based on an embedded architecture. The pairing relationship may be understood as an association relationship between the conference controller 302 and the hard terminal 31. In some embodiments, a pairing relationship may exist between a conference controller 302 and a hard terminal 31 that are deployed in a same conference room. In this way, the conference controller 302 may be used to remotely control the hard terminal 31 in the same conference room, to implement conference control.

Considering that a plurality of hard terminals 31 may be deployed in one conference room, a quantity of hard terminals 31 that have a pairing relationship with the conference controller 302 is not limited in embodiments of this application. For example, when only one hard terminal 31 is deployed in the conference room, the conference controller 302 may have a pairing relationship with the hard terminal 31. When two hard terminals 31 are deployed in the conference room, the conference controller 302 may have a pairing relationship with both the two hard terminals 31. In this way, the conference controller 302 may perform switching among the plurality of hard terminals 31, to resolve a remote conference control problem of the plurality of hard terminals in the conference room.

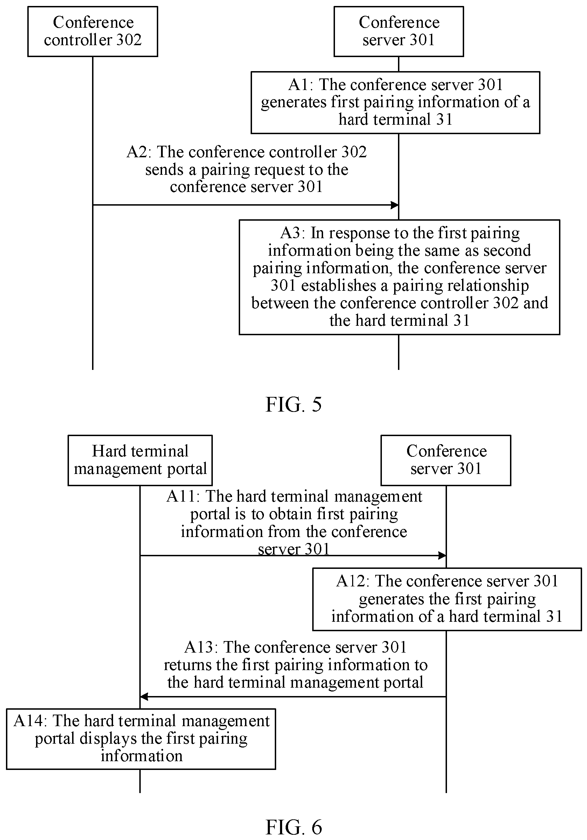

The pairing relationship between the conference controller 302 and the hard terminal 31 may be stored in the conference server 301. FIG. 5 is a schematic flowchart of establishing a pairing relationship. A conference server 301 may establish a pairing relationship between a conference controller 302 and a hard terminal 31 according to the following steps.

A1: The conference server 301 generates first pairing information of the hard terminal 31.

The first pairing information may be understood as correct verification information required for pairing with the hard terminal 31. In different scenarios, the first pairing information may be represented in different forms. For example, the first pairing information may be a pairing code, a pairing QR code, and a pairing account and a pairing account credential. This is not limited in embodiments of this application.

In some possible implementations, FIG. 6 is a schematic flowchart of generating first pairing information. A conference server 301 may generate the first pairing information according to the following steps.

A11: A hard terminal management portal is to obtain the first pairing information from the conference server 301.

A12: The conference server 301 generates the first pairing information of a hard terminal 31.

A13: The conference server 301 returns the first pairing information to the hard terminal management portal.

A14: The hard terminal management portal displays the first pairing information.

The hard terminal management portal may be a website that is provided by the conference server 301 and that is used for hard terminal management. Specifically, a user (for example, a conference room administrator) may access the hard terminal management portal through a mobile device, and trigger, on the hard terminal management portal, generation of a request for obtaining the first pairing information. In response to the request, the conference server 301 may generate the first pairing information, for example, randomly generate a pairing code, randomly generate a pairing QR code, or randomly generate a pairing account and a pairing account credential. In this way, after the hard terminal management portal receives the first pairing information, the hard terminal management portal may display the first pairing information. In other words, the conference room administrator may view the first pairing information in the hard terminal management portal through the mobile device.

A2: A conference controller 302 sends a pairing request to the conference server 301.

The pairing request carries second pairing information, and the second pairing information may be understood as verification information used for pairing with the hard terminal 31.

The second pairing information and the first pairing information may have a same representation form. For example, when the first pairing information is a pairing code generated by the conference server 301, the second pairing information may be a pairing code input by the user via the conference controller 302; when the first pairing information is a pairing QR code generated by the conference server 301, the second pairing information may be information obtained by the user scanning the pairing QR code by using the conference controller 302; or when the first pairing information is a pairing account and a pairing account credential, the second pairing information may be a pairing account and a pairing account credential that are input by the user via the conference controller 302.

In some possible implementations, the first pairing information may be displayed on the hard terminal portal. The conference room administrator may input the second pairing information on the conference controller 302 based on the first pairing information displayed on the hard terminal portal, to send the pairing request to the conference server 301. For example, the first pairing information displayed on the hard terminal portal is "123456". The conference room administrator may carry the mobile device to the conference room, and input "123456" on the conference controller 302 in the conference room based on the viewed first pairing information.

A3: In response to the first pairing information being the same as the second pairing information, the conference server 301 establishes the pairing relationship between the conference controller 302 and the hard terminal 31.

After receiving the second pairing information, the conference server 301 may perform matching between the second pairing information and the first pairing information. When the first pairing information is the same as the second pairing information, it indicates that the verification information sent by the conference controller 302 is the correct verification information required for pairing with the hard terminal 31, and the conference server 301 may establish the pairing relationship between the conference controller 302 and the hard terminal 31.

Considering a security problem that may occur in a process in which the conference server 301 establishes the pairing relationship, after receiving the pairing request sent by the conference controller 302, the conference server 301 may further perform identifier verification on the conference controller 302.

In some embodiments, the first pairing information is a pairing code. In consideration of a remote spoofing problem, the conference server 301 may verify an identifier of the conference controller 302 in a local secondary verification manner. For example, the conference server 301 may send a secondary verification code to the hard terminal management portal, and the conference room administrator may obtain the secondary verification code by viewing the hard terminal portal, and input the secondary verification code on the conference controller 302, to perform identifier verification.

In some other embodiments, the first pairing information is a pairing QR code. In consideration of a spoofing problem of the pairing QR code, the conference server 301 may determine whether the conference controller 302 and the conference room administrator are users of a same tenant, to perform identifier verification.

In some other embodiments, the first pairing information is a pairing account and a pairing account credential. The conference server 301 may verify the identifier of the conference controller 302 in a manner such as locking by using an anti-attack slider, to perform identifier verification.

It should be noted that, in embodiments of this application, after the conference server 301 establishes the pairing relationship between the conference controller 302 and the hard terminal 31, pairing does not need to be performed again when the conference controller 302 is subsequently turned on. In other words, in a specific period, the pairing relationship between the conference controller 302 and the hard terminal 31 may be kept alive.

Similarly, the conference server 301 may further remove the pairing relationship between the conference controller 302 and the hard terminal 31. In some embodiments, the user (for example, the conference room administrator) may trigger generation of an unpairing request through the hard terminal management portal. In some other embodiments, the user may alternatively trigger generation of an unpairing request via the conference controller 302. After receiving the unpairing request, the conference server 301 may delete the pairing relationship between the conference controller 302 and the hard terminal 31, to complete unbinding.

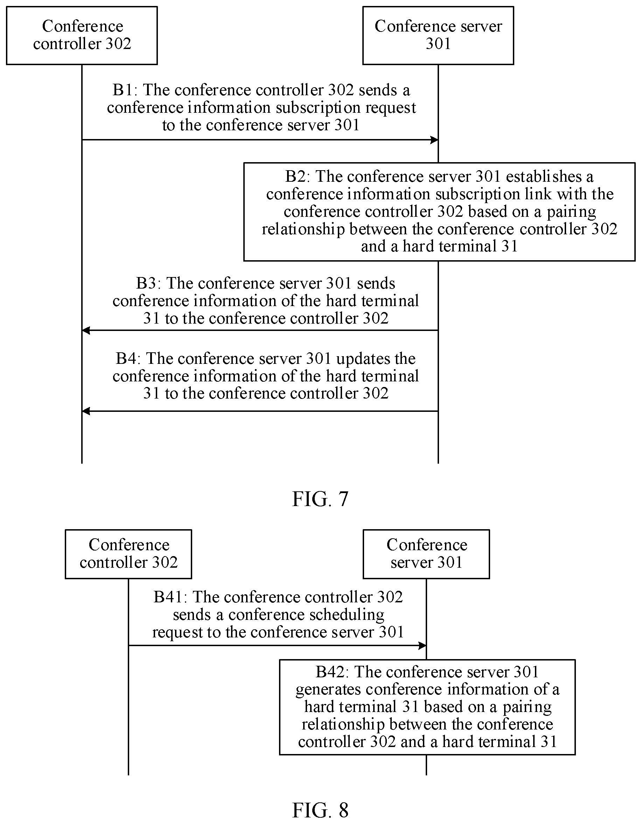

After the conference server 301 establishes the pairing relationship between the conference controller 302 and the hard terminal 31, the conference server 301 may push conference information related to the hard terminal 31 to the conference controller 302. FIG. 7 is a schematic flowchart of pushing conference information of a hard terminal. The conference server 301 may establish a conference information subscription link according to the following steps.

B1: The conference controller 302 sends a conference information subscription request to the conference server 301.

B2: The conference server 301 establishes a conference information subscription link with the conference controller 302 based on the pairing relationship between the conference controller 302 and the hard terminal 31.

It may be understood that, after the conference controller 302 have the pairing relationship with the hard terminal 31, the conference controller 302 may send the conference information subscription request, to request to obtain the conference information of the hard terminal 31. The conference server 301 may establish the conference information subscription link between the conference server 301 and the conference controller 302 based on the pairing relationship between the conference controller 302 and the hard terminal 31, where the conference information subscription link may be used to transmit the conference information of the hard terminal 31.

B3: The conference server 301 sends the conference information of the hard terminal 31 to the conference controller 302 through the conference information subscription link.

Because the conference information subscription link exists between the conference server 301 and the conference controller 302, the conference server 301 may send the obtained conference information of the hard terminal 31 to the conference controller 302 through the conference information subscription link. For example, the conference server 301 may send, to the conference controller 302 in a form of a conference list, a to-be-held video conference of the hard terminal 31.

In this way, the conference controller 302 may present the conference information of the hard terminal 31, and a user (for example, a conference participant) may intuitively view and learn of the conference information of the hard terminal 31 in the conference room via the conference controller 302, thereby implementing pushing of the conference information of the hard terminal 31 to the conference controller 302.

B4: In response to a change of the conference information of the hard terminal 31, the conference server 301 updates the conference information of the hard terminal 31 to the conference controller 302 through the conference information subscription link.

It may be understood that the conference information of the hard terminal 31 may change. For example, a to-be-held video conference is added, or an existing to-be-held video conference is deleted. When the conference information of the hard terminal 31 changes, the conference server 301 may push the conference information of the hard terminal 31 again through the conference information subscription link, to update the conference information presented in the conference controller 302.

In some possible implementations, the user may change the conference information of the hard terminal 31 via the conference controller 302. FIG. 8 is a schematic flowchart of scheduling a conference. The conference server 301 may generate the conference information of the hard terminal 31 through the following steps.

B41: The conference controller 302 sends a conference scheduling request to the conference server 301.

B42: The conference server 301 generates the conference information of the hard terminal 31 based on the pairing relationship between the conference controller 302 and the hard terminal 31.

The conference scheduling request may carry the conference information, for example, carry information such as a conference subject, conference time, and a conference participant. A user (for example, a conference participant) triggers generation of the conference scheduling request via the conference controller 302. After receiving the conference scheduling request, the conference server 301 may determine, based on the pairing relationship, a hard terminal 31 whose conference information needs to be changed, and generate conference information of the hard terminal 31 based on the information carried in the conference scheduling request, thereby implementing conference scheduling.

In this way, after generating the conference information of the hard terminal 31, the conference server 301 may push the conference information of the hard terminal 31 again through the conference information subscription link, to notify the conference controller 302 of a conference scheduling result, thereby updating the conference information presented in the conference controller 302.

S403: The conference server 301 processes the conference control request, to control the at least one hard terminal 31 to execute the target instruction.

Because the conference server 301 determines the at least one hard terminal 31 that has the pairing relationship with the conference controller 302, the conference server 301 may process the conference control request, to control the at least one hard terminal 31 to execute the target instruction, thereby implementing effect that can be achieved by remotely controlling the hard terminal to process the conference control request by the conference controller 302.

For example, when the conference control request is used to request to join the video conference, the conference server 301 processes the conference control request, so that the at least one hard terminal 31 can join the video conference. For another example, when the conference control request is used to request to share a screen in the video conference, the conference server 301 processes the conference control request, so that projection content can be displayed on the at least one hard terminal 31.

The following separately describes different conference control requests.

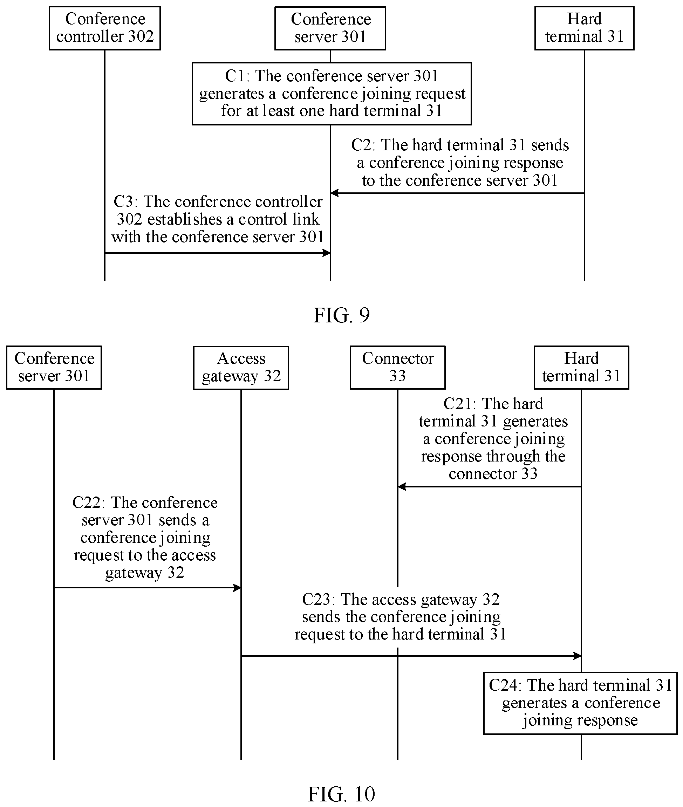

In some embodiments, the conference control request is used to request to join the video conference. FIG. 9 is a schematic flowchart of joining a video conference. The hard terminal 31 may join the video conference according to the following steps.

C1: The conference server 301 generates a conference joining request for the at least one hard terminal 31.

Because the conference control request is a request for joining the video conference, the conference server 301 may determine, based on the pairing relationship of the conference controller 302, the at least one hard terminal 31 that has the pairing relationship with the conference controller 302, so as to generate the conference joining request for the at least one hard terminal 31.

C2: The hard terminal 31 sends a conference joining response to the conference server 301.

In response to the conference joining request generated by the conference server 301, the hard terminal 31 may exchange a response, to join the video conference. Specifically, the hard terminal 31 may generate the conference joining response in different manners.

FIG. 10 is a schematic flowchart of generating a conference joining response. In embodiments of this application, a hard terminal is supported in generating a conference joining response according to step C21, or generating a conference joining response according to step C22 to step C24.

In some possible implementations, for example, C21, the hard terminal 31 may generate the conference joining response through a connector 33. During specific implementation, when the hard terminal 31 is not registered with an access gateway 32, the conference server 301 cannot address the hard terminal 31. Therefore, the hard terminal 31 may actively generate the conference joining response through the connector 33, to join the video conference.

In some other possible implementations, for example, C22 to C24, the conference server 301 may forward the conference joining request for the at least one hard terminal 31 to the at least one hard terminal 31 through an access gateway, and in response to the at least one hard terminal 31 answering the conference joining request, the at least one hard terminal 31 may generate a conference joining response.

During specific implementation, when the hard terminal 31 is registered with the access gateway 32, the access gateway 32 may perform routing based on a hard terminal identifier (for example, a hard terminal number) carried in the conference joining request, and forward the conference joining request to the hard terminal 31. In this way, the hard terminal 31 is configured to be in an automatic answering mode, so that the hard terminal 31 can automatically generate the conference joining response, and join the video conference.

C3: The conference controller 302 establishes a control link with the conference server 301.

After the at least one hard terminal 31 joins the video conference, it indicates that the at least one hard terminal 31 is already in the video conference, and the conference server 301 may send conference joining information of the hard terminal 31 to the conference controller 302, for example, update a status of the hard terminal 31 to the conference controller 302 as "joined". In this way, the conference controller 302 may obtain the conference joining information, and establish a persistent connection (namely, a control link) with the conference server 301. In a video conference process, the conference controller 302 may remotely control the hard terminal 31 through the control link.

For example, in the video conference process, the conference controller 302 may send the target instruction to the conference server 301 through the control link, for example, an instruction for muting a hard terminal, an instruction for opening a video image of a hard terminal, an instruction for inviting another conference participant, or an instruction for adjusting a conference view. The conference server 301 controls, by processing the target instruction, the at least one hard terminal 31 to execute the target instruction, to implement various conference control functions.

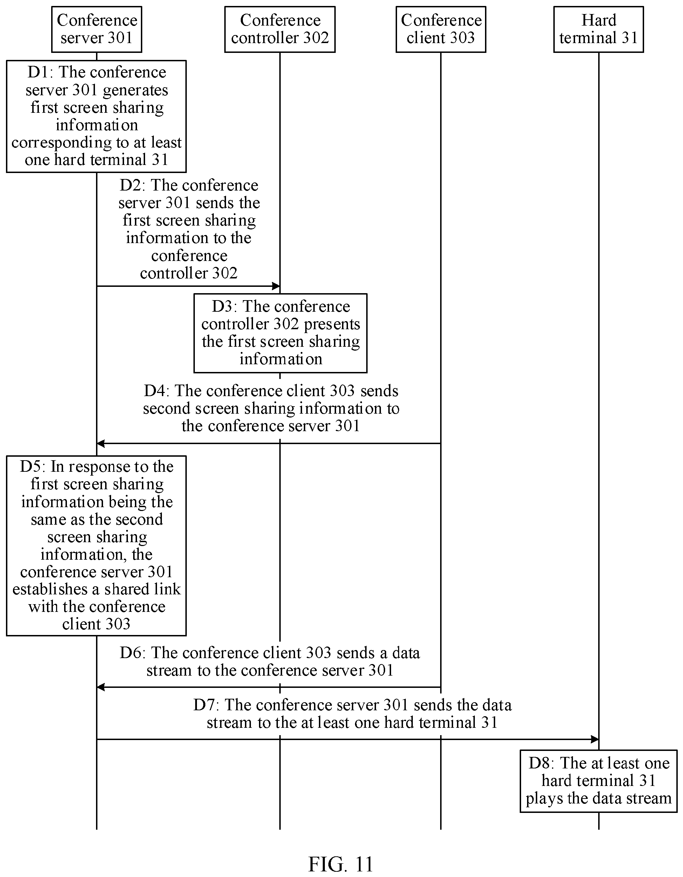

In some other embodiments, the conference control request is used to request to share a screen in the video conference. FIG. 11 is a schematic flowchart of sharing a screen. The hard terminal 31 may implement screen sharing according to the following steps.

D1: The conference server 301 generates first screen sharing information corresponding to at least one hard terminal 31.

D2: The conference server 301 sends the first screen sharing information to the conference controller 302.

D3: The conference controller 302 presents the first screen sharing information.

The first screen sharing information may be understood as correct verification information required for implementing screen sharing on the hard terminal 31. In embodiments of this application, the first screen sharing information may be generated by the conference server 301, and presented in the conference controller 302.

D4: The conference client 303 sends second screen sharing information to the conference server 301.

The conference client 303 may be deployed on a device of the conference participant in the video conference, for example, deployed on a personal computer or a mobile device used by the conference participant. In this way, the conference participant may perform screen sharing through the conference client 303. The second screen sharing information may be understood as verification information used to implement screen sharing on the hard terminal 31.

Specifically, the conference participant may trigger a projection request through the conference client 303, and input the second screen sharing information based on the first screen sharing information presented in the conference controller 302, for verification.

D5: In response to the first screen sharing information being the same as the second screen sharing information, the conference server 301 establishes a shared link with the conference client 303.

After receiving the second screen sharing information, the conference server 301 may perform matching between the second screen sharing information and the first screen sharing information. When the first screen sharing information is the same as the second screen sharing information, it indicates that verification information sent by the conference client 303 is correct verification information required for implementing screen sharing on the hard terminal 31. The conference server 301 may establish the shared link between the conference server 301 and the conference client 303, and the shared link may receive a data stream sent by the conference client 303.

D6: The conference client 303 sends the data stream to the conference server 301.

D7: The conference server 301 sends the data stream to the at least one hard terminal 31.

D8: The at least one hard terminal 31 plays the data stream.

In this way, the conference client 303 may send the data stream, for example, a data stream of a current desktop of the conference client 303, to the conference server 301 through the shared link. After receiving the data stream, the conference server 301 may send the data stream to the at least one hard terminal 31, so that the at least one hard terminal 31 can play the data stream, for example, play the data stream on an external display connected to the at least one hard terminal 31, to display content that is the same as that of the conference client 303, thereby implementing screen sharing.

It may be understood that the conference participant may also perform screen sharing before the video conference starts. When the conference client 303 sends a projection request, but the hard terminal 31 does not join the video conference, the conference server 301 may perform step C1 and step C2 to control the hard terminal 31 to join the video conference, and then implement screen sharing.

It can be learned from the foregoing description that, the pairing relationship between the conference controller and the hard terminal is established, so that the user can trigger, via the conference controller, generation of the target instruction related to the video conference, and implement, through processing by the conference server, effect of remotely controlling the hard terminal to execute the target instruction, thereby enriching conference control functions and improving user experience in the video conference.

The foregoing describes the conference control method provided in embodiments of this application. The following describes the conference control method with reference to specific scenarios.

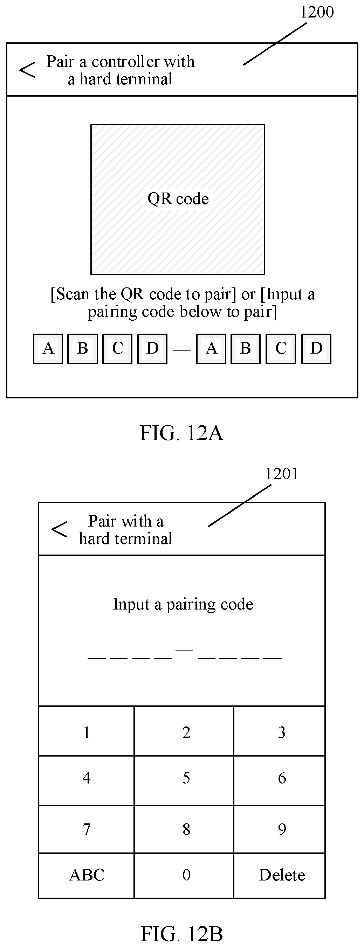

FIG. 12A to FIG. 12Q are diagrams of a conference control interface. FIG. 12A is a display window 1200 of first pairing information. Specifically, the display window 1200 of first pairing information may be presented in a hard terminal management portal. After a user (for example, a conference room administrator) obtains the first pairing information, a conference server 301 may return the first pairing information. In this way, the hard terminal management portal may present the display window 1200 of the first pairing information, and the first pairing information may be displayed in the display window 1200 of the first pairing information, for example, a pairing QR code and a pairing code (for example, ABCD-ABCD) are displayed.

FIG. 12B shows an input window 1201 of second pairing information. Specifically, the input window 1201 of the second pairing information may be presented in a conference controller 302, and the user (for example, the conference room administrator) may input the second pairing information based on the first pairing information presented in the display window 1200 of the first pairing information, to perform pairing between the conference controller 302 and a hard terminal 31.

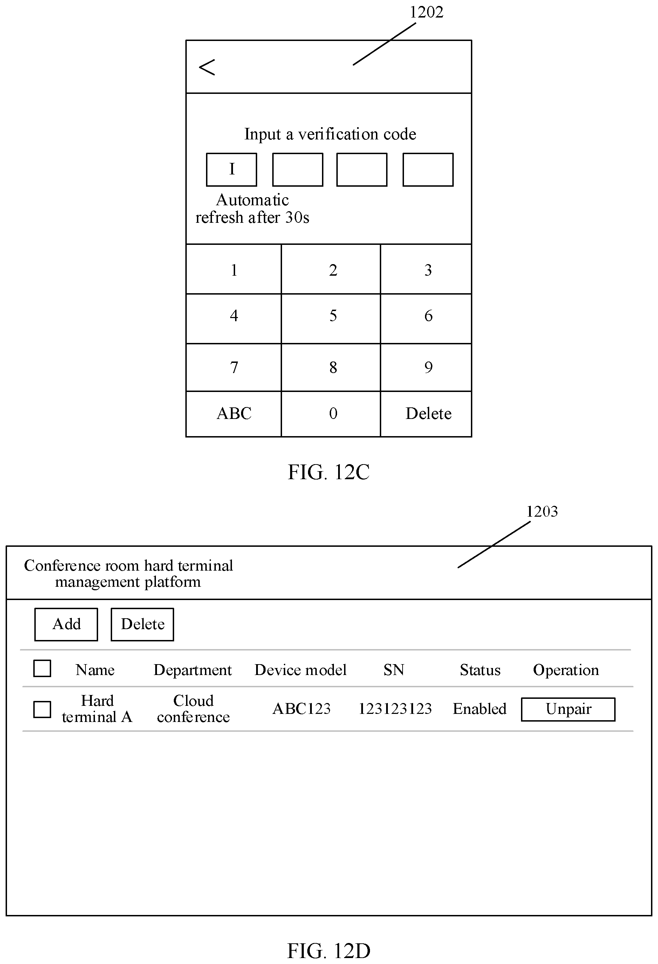

FIG. 12C shows a verification code input window 1202. Specifically, the verification code input window 1202 may be presented in the conference controller 302. After the user (for example, the conference room administrator) sends a pairing request via the conference controller 302, the conference server 301 may perform identifier verification on the conference controller 302 by sending a verification code. For example, the conference server 301 may send the verification code to a mobile device of the conference room administrator, and present the verification code input window 1202 in the conference controller 302. The conference room administrator may input the verification code in the verification code input window 1202 based on the verification code received in the mobile device, to complete identifier verification.

FIG. 12D shows a hard terminal management portal 1203. After the conference server 301 establishes a pairing relationship between the conference controller 302 and the hard terminal 31, the user (for example, the conference room administrator) may view the pairing relationship through the hard terminal management portal 1203. In addition, the hard terminal management portal 1203 may further display information related to the hard terminal, for example, a name of the hard terminal, a department to which the hard terminal belongs, a device model of the hard terminal, a serial number (serial number, SN) of the hard terminal, and a status of the hard terminal.

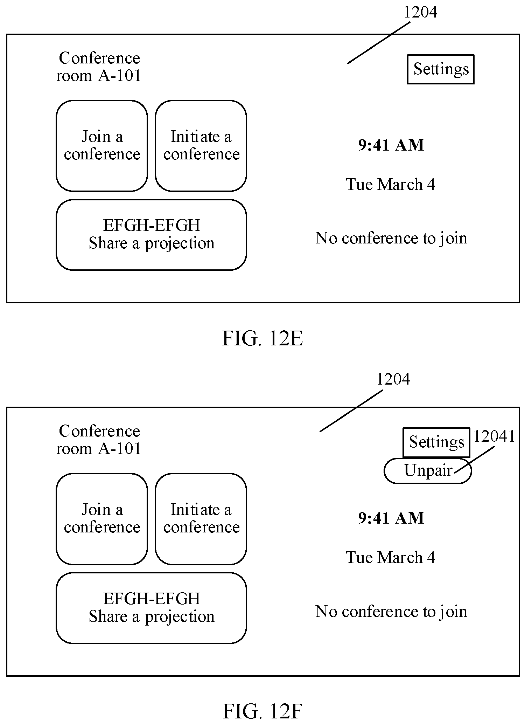

FIG. 12E shows a display page 1204 of a conference controller. After the conference server 301 establishes the pairing relationship between the conference controller 302 and the hard terminal 31, the display page 1204 of the conference controller may display information related to the hard terminal 31 (for example, a name of the hard terminal 31), and provide a conference joining control, a conference initiation control, and a projection sharing control, to help the user remotely control the hard terminal 31 through the controls provided on the display page 1204 of the conference controller.

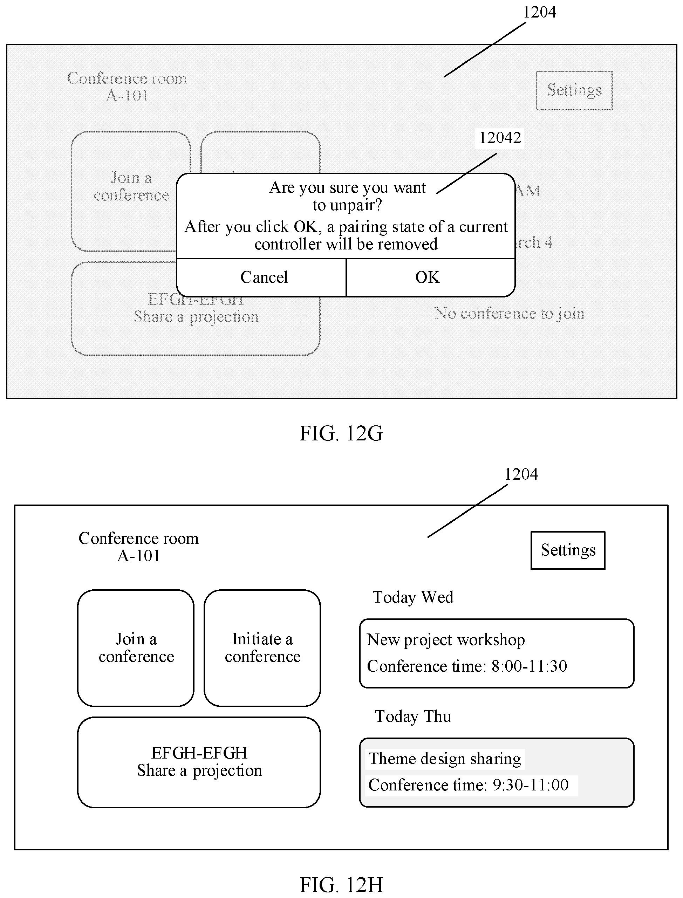

After the conference server 301 establishes the pairing relationship between the conference controller 302 and the hard terminal 31, the user may remove the pairing relationship via the conference controller 302. As shown in FIG. 12F and FIG. 12G, the display page 1204 of the conference controller provides a setting control. After the user triggers the setting control, an unpairing control 12041 may be further presented. After the user triggers the unpairing control 12041, an unpairing window 12042 may be presented on the display page 1204 of the conference controller. The unpairing window 12042 is used to confirm, with the user, whether to remove the pairing relationship between the conference controller and the hard terminal. In some other embodiments, the user may alternatively perform unbinding through the unpairing control provided by the hard terminal management portal 1203. This is not limited in embodiments of this application.

After the conference server 301 establishes the pairing relationship between the conference controller 302 and the hard terminal 31, the conference server 301 may push conference information of the hard terminal 31 to the conference controller 302. As shown in FIG. 12H, the display page 1204 of the conference controller presents the conference information of the hard terminal 31, for example, conference time and a conference subject.

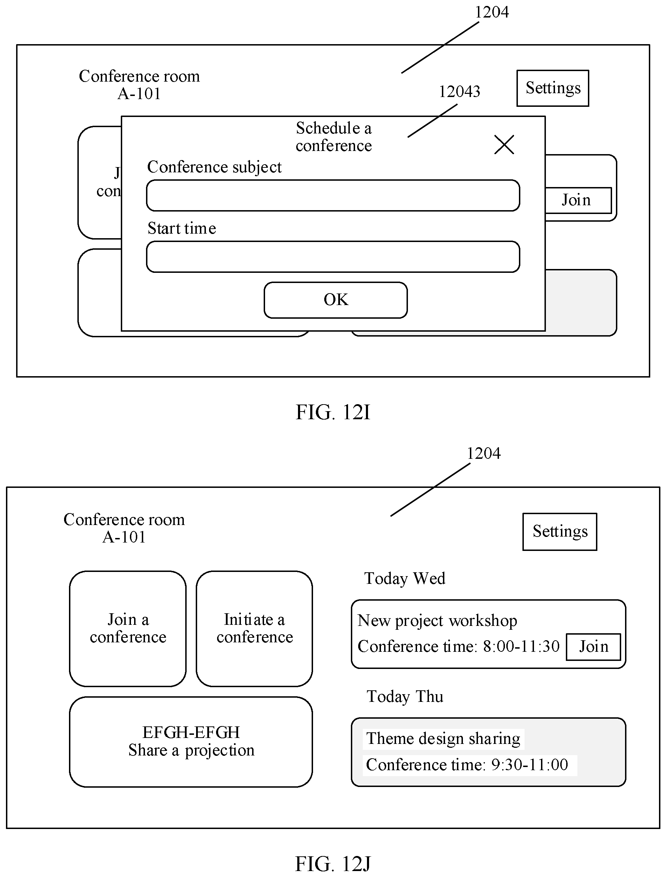

The user may schedule a conference by triggering the conference initiation control in the display page 1204 of the conference controller. As shown in FIG. 12I, the display page 1204 of the conference controller may present a conference scheduling window 12043, and the user may input conference information such as a conference subject and conference time in the conference scheduling window 12043, to schedule a conference.

As shown in FIG. 12J, when a conference of the hard terminal 31 is ongoing, in the display page 1204 of the conference controller, a join control may be provided in an information area of an ongoing conference, and the user may control, by triggering the join control, the hard terminal to join the ongoing conference.

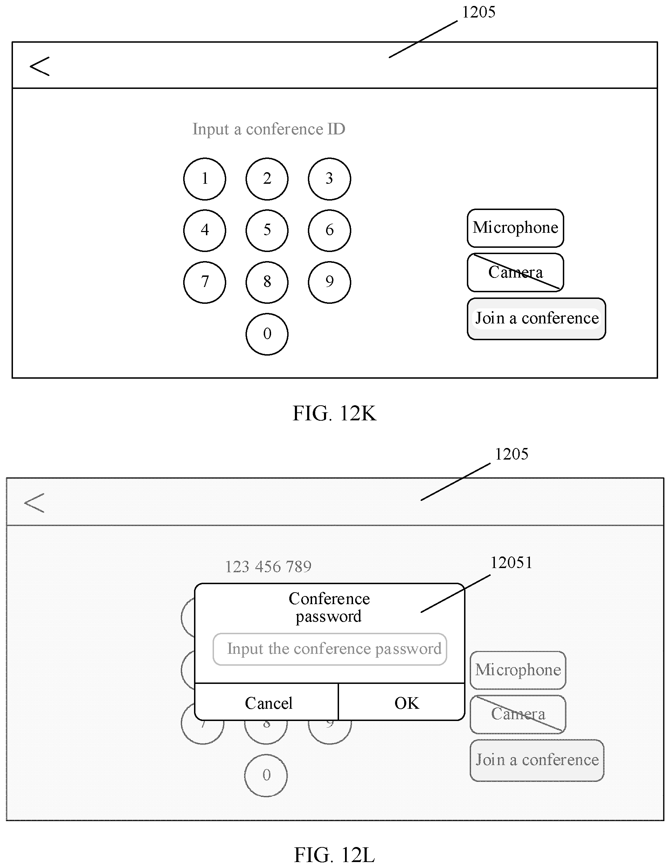

FIG. 12K shows a conference joining page 1205. Specifically, the conference joining page 1205 may be presented in the conference controller 302. The user may input a conference ID through the conference joining page 1205, to control the hard terminal 31 to join the video conference. As shown in FIG. 12L, for a video conference that requires a conference password, after the user inputs the conference ID, the conference joining page 1205 may further present a password input window 12051, and the user may input the conference password through the password input window 12051, to control the hard terminal 31 to join the video conference.

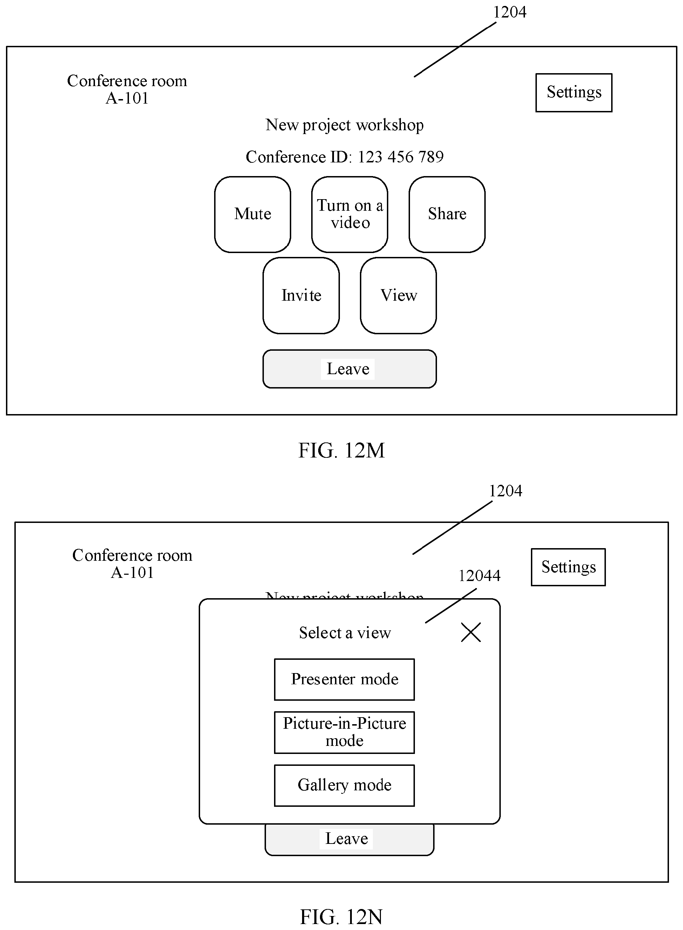

After the hard terminal 31 joins the video conference, as shown in FIG. 12M, the display page 1204 of the conference controller may present a plurality of instruction controls, to support the user in implementing remote conference control for the hard terminal 31 via the conference controller 302. For example, the display page 1204 of the conference controller may display the conference subject and the conference ID, and provide a mute control, a control for turning on a video, a screen sharing control, a control for inviting another conference participant, a conference view adjustment control, and the like.

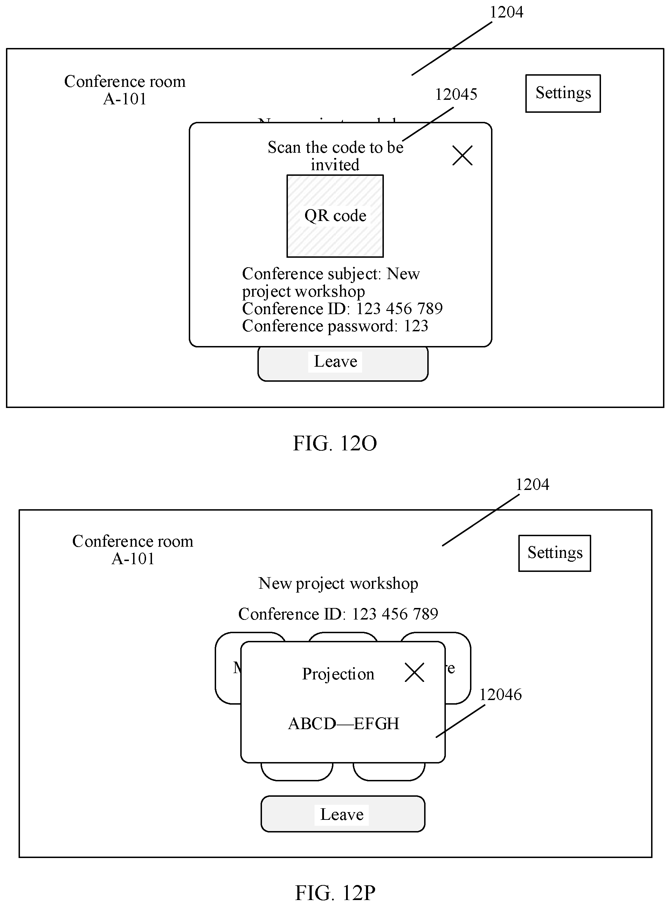

The user may generate different conference control requests by triggering the instruction controls. As shown in FIG. 12N, FIG. 12O, and FIG. 12P, after the user triggers the conference view adjustment control, the display page 1204 of the conference controller may present a view selection window 12044. The user may adjust a conference view in the video conference through the view selection window 12044, for example, adjust the conference view to a presenter mode, a picture-in-picture mode, or a gallery mode. After the user triggers the control for inviting another conference participant, the display page 1204 of the conference controller may present an invitation window 12045. The invitation window 12045 may present an invitation QR code, a conference subject, a conference ID, and a conference password, so that the another conference participant joins the video conference through the invitation window 12045. After the user triggers the screen sharing control, the display page 1204 of the conference controller may present a projection window 12046, and the projection window 12046 displays first screen sharing information (for example, a projection code "ABCDEFGH"). The user may input second screen sharing information in the conference client 303, to implement screen sharing.

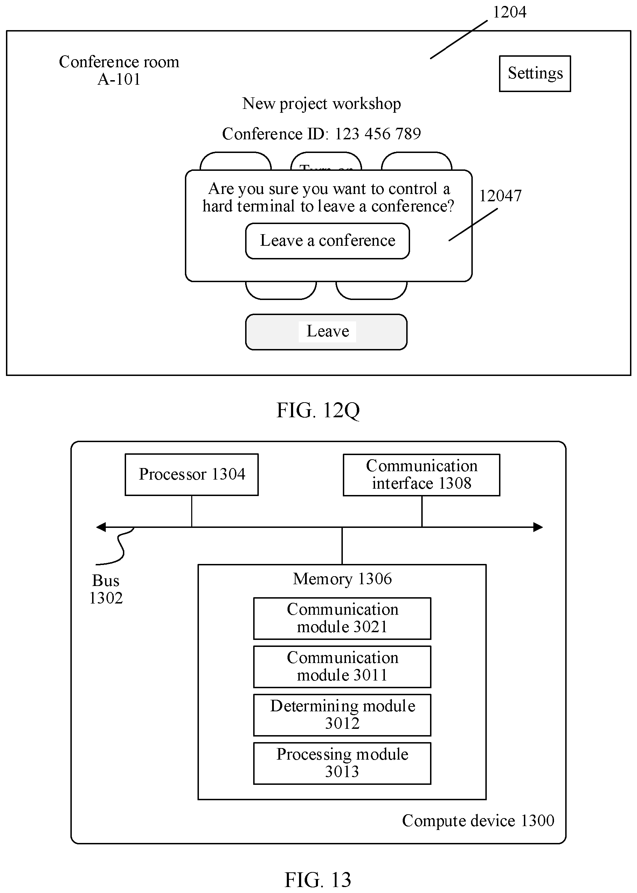

The display page 1204 of the conference controller may further provide a conference leaving control. As shown in FIG. 12Q, after the user triggers the conference leaving control, the display page 1204 of the conference controller may present a conference leaving window 12047, and the conference leaving window 12047 is used to confirm, with the user, whether to leave a current video conference. In this way, the conference controller 302 has a capability of remotely controlling the hard terminal 31 based on the pairing relationship between the conference controller 302 and the hard terminal 31, thereby implementing various conference control functions.

Based on the conference control method in the foregoing embodiment, an embodiment of this application further provides the foregoing conference control system 30. The following describes the conference control system 30 with reference to the accompanying drawings.

FIG. 3 is a diagram of a structure of a conference control system 30. The conference control system 30 includes:
a conference controller 302, configured to send a conference control request, where the conference control request is used to request to execute a target instruction related to a video conference; and
a conference server 301, configured to: receive the conference control request, and determine at least one hard terminal that has a pairing relationship with the conference controller, where the hard terminal is configured to implement a hardware video conference based on an embedded architecture; and
the conference server 301 is further configured to process the conference control request, to control the at least one hard terminal to execute the target instruction.

The conference controller 302 may include a communication module 3021, and the communication module 3021 is configured to send the conference control request. Similarly, the conference server 301 may include a communication module 3011, a determining module 3012, and a processing module 3013. The communication module 3011 is configured to receive the conference control request, the determining module 3012 is configured to determine at least one hard terminal that has a pairing relationship with the conference controller, and the processing module 3013 is configured to process the conference control request, to control the at least one hard terminal to execute the target instruction.

The communication module 3021, the communication module 3011, the determining module 3012, and the processing module 3013 may be implemented through a hardware module or a software module. The communication module 3021, the communication module 3011, the determining module 3012, and the processing module 3013 may be implemented through a compute device or a compute engine on a compute device. The following uses the determining module 3012 as an example for description.

When being implemented through software, the determining module 3012 may be an application or an application module, for example, a compute engine, running on a compute device or a compute device cluster. The application may be provided as a virtualization service for a user to use. The virtualization service may include a virtual machine (virtual machine, VM) service, a bare metal server (bare metal server, BMS) service, and a container (container) service. The VM service may be a service of virtualizing a virtual machine (virtual machine, VM) resource pool on a plurality of physical hosts (for example, compute devices) by using a virtualization technology, to provide a VM on demand for the user to use. The BMS service is a service of virtualizing a BMS resource pool on a plurality of physical hosts to provide a BMS on demand for the user to use. The container service is a service of virtualizing a container resource pool on a plurality of physical hosts to provide a container on demand for the user to use. The VM is a simulated virtual computer, namely, a logical computer. The BMS is an elastically scalable high-performance computing service whose computing performance is the same as that of a conventional physical machine, and has a feature of secure physical isolation. The container is a kernel virtualization technology capable of providing lightweight virtualization to isolate user spaces, processes, and resources. It should be understood that the VM service, the BMS service, and the container service in the virtualization service are merely specific examples. In actual application, the virtualization service may alternatively be another lightweight or heavyweight virtualization service. This is not specifically limited herein.

When being implemented through hardware, the determining module 3012 may include at least one compute device, for example, a server. Alternatively, the determining module 3102 may be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field programmable gate array (field programmable gate array, FPGA), generic array logic (generic array logic, GAL), or any combination thereof.

In some possible implementations, the conference controller 302 presents at least one instruction control, and the conference controller 302 (for example, the communication module 3021) is specifically configured to:
in response to a trigger operation performed on a target control in the at least one instruction control, send a conference control request corresponding to the target control.

In some possible implementations, the conference server 301 further includes a generation module and an establishment module (not shown in the figure), and the conference server 301 (for example, the generation module) is further configured to:
generate first pairing information of the hard terminal;
the conference server 301 (for example, the communication module 3021) is further configured to:
   receive a pairing request sent by the conference controller 302 (for example, the communication module 3021), where the pairing request carries second pairing information; and
   the conference server 301 (for example, the establishment module) is further configured to:
      in response to the first pairing information being the same as the second pairing information, establish the pairing relationship between the conference controller 302 and the hard terminal.

In some possible implementations, the conference server 301 (for example, the communication module 3011) is further configured to:
receive a conference information subscription request sent by the conference controller 302 (for example, the communication module 3021); and
the conference server 301 (for example, the establishment module) is further configured to:
   establish a conference information subscription link with the conference controller 302 based on the pairing relationship between the conference controller 302 and the hard terminal, where the conference information subscription link is used to transmit conference information of the hard terminal.

In some possible implementations, the conference server 301 (for example, the communication module 3011) is further configured to:
send the conference information of the hard terminal to the conference controller 302 (for example, the communication module 3021) through the conference information subscription link; or
in response to a change of the conference information of the hard terminal, update the conference information of the hard terminal to the conference controller 302 (for example, the communication module 3021) through the conference information subscription link.

In some possible implementations, the conference control request is used to request to join the video conference, and the conference server 301 (for example, the processing module 3013) is specifically configured to:
generate a conference joining request for the at least one hard terminal; and
in response to receiving a conference joining response from the at least one hard terminal, establish a control link with the conference controller 302, where the control link is used to control the at least one hard terminal to execute the target instruction in a video conference process.

In some possible implementations, the at least one hard terminal is further configured to:
generate a conference joining response through a connector; or
forward, by the conference server 301 (for example, the communication module 3011) the conference joining request for the at least one hard terminal to the at least one hard terminal through an access gateway, and in response to the at least one hard terminal answering the conference joining request, generate a conference joining response.

In some possible implementations, the conference control request is used to request to share a screen in the video conference, and the conference server 301 (for example, the processing module 3013) is specifically configured to:
generate first screen sharing information corresponding to the at least one hard terminal, and send the first screen sharing information to the conference controller 302, to enable the conference controller 302 to present the first screen sharing information;
receive second screen sharing information sent by a conference client 303, and in response to the first screen sharing information being the same as the second screen sharing information, establish a shared link with the conference client 303, where the conference client 303 is deployed on a device of a conference participant in the video conference; and
receive a data stream sent by the conference client 303 through the shared link, and send the data stream to the at least one hard terminal, to enable the at least one hard terminal to play the data stream.

This application further provides a compute device 1300. As shown in FIG. 13, the compute device 1300 includes a bus 1302, a processor 1304, a memory 1306, and a communication interface 1308. The processor 1304, the memory 1306, and the communication interface 1308 communicate with each other through the bus 1302. The compute device 1300 may be a server or a terminal device. It should be understood that a quantity of processors and a quantity of memories in the compute device 1300 are not limited in this application.

The bus 1302 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 13, but this does not mean that there is only one bus or one type of bus. The bus 1302 may include a path for transmission of information between components (for example, the memory 1306, the processor 1304, and the communication interface 1308) of the compute device 1300.

The processor 1304 may include any one or more of processors, such as a central processing unit (central processing unit, CPU), a graphics processing unit (graphics processing unit, GPU), a microprocessor (microprocessor, MP), or a digital signal processor (digital signal processor, DSP).

The memory 1306 may include a volatile memory (volatile memory), for example, a random access memory (random access memory, RAM). The memory 1306 may further include a non-volatile memory (non-volatile memory), for example, a read-only memory (read-only memory, ROM), a flash memory, a hard disk drive (hard disk drive, HDD), or a solid-state drive (solid-state drive, SSD). The memory 1306 stores executable program code, and the processor 1304 executes the executable program code to implement the conference control method. Specifically, the memory 1306 stores instructions used by the conference control system 30 to perform the conference control method.

The communication interface 1308 implements communication between the compute device 1300 and another device or a communication network by using a transceiver module, for example, but not limited to a network interface card or a transceiver.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

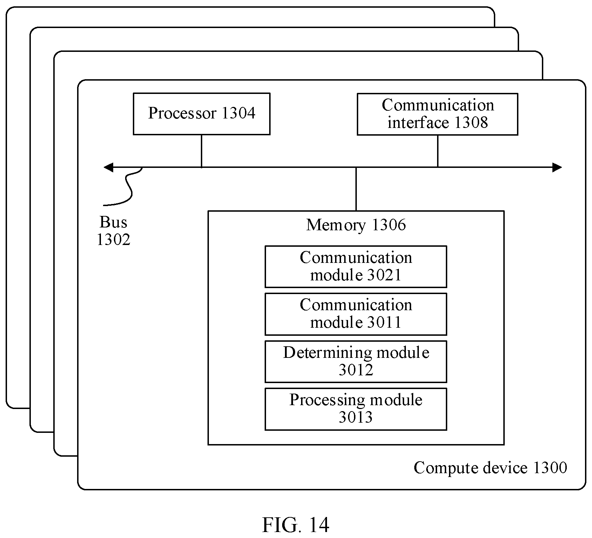

As shown in FIG. 14, the compute device cluster includes at least one compute device 1300. A memory 1306 in one or more compute devices 1300 in the compute device cluster may store same instructions used by a conference control system 30 to perform a conference control method.

In some possible implementations, one or more compute devices 1300 in the compute device cluster may alternatively store some instructions used by the conference control system 30 to perform the conference control method. In other words, a combination of the one or more compute devices 1300 may jointly execute the instructions used by the conference control system 30 to perform the conference control method.

It should be noted that memories 1306 in different compute devices 1300 in the compute device cluster may store different instructions used for performing some functions of the conference control system 30.

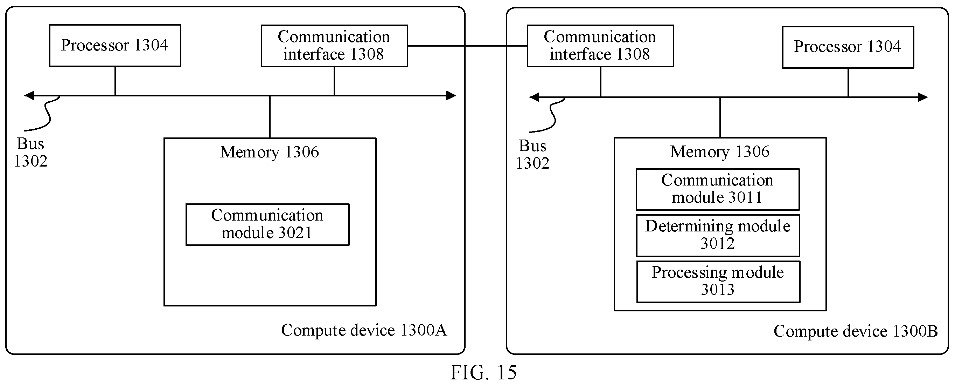

FIG. 15 shows a possible implementation. As shown in FIG. 15, two compute devices 1300A and 1300B are connected through a communication interface 1308. A memory in the compute device 1300A stores instructions used for performing functions of a conference controller (for example, a communication module 3021). A memory in the compute device 1300B stores instructions used for performing functions of a conference server (for example, a communication module 3011, a determining module 3012, and a processing module 3013). In other words, the memories 1306 of the compute devices 1300A and 1300B jointly store instructions used by the conference control system 30 to execute a conference control method.

A connection manner between compute device clusters shown in FIG. 15 may be based on a fact that a conference control method provided in this application is applied to the conference control system 30, and the conference control system 30 includes the conference controller and the conference server. Therefore, it is considered that functions implemented by the communication module 3021 are performed by the compute device 1300A, and functions implemented by the communication module 3011, the determining module 3012, and the processing module 3013 are performed by the compute device 1300B.

It should be understood that functions of the compute device 1300A shown in FIG. 15 may alternatively be completed by a plurality of compute devices 1300. Similarly, functions of the compute device 1300B may alternatively be completed by the plurality of compute devices 1300.

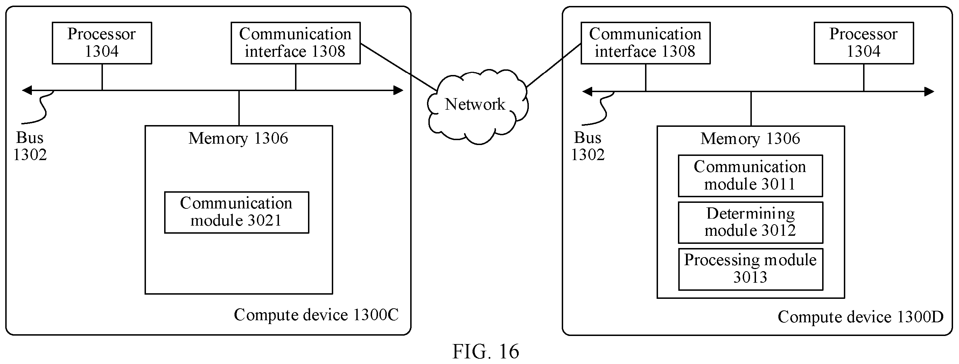

In some possible implementations, one or more compute devices in the compute device cluster may be connected through a network. The network may be a wide area network, a local area network, or the like. FIG. 16 shows a possible implementation. As shown in FIG. 16, two compute devices 1300C and 1300D are connected through a network. Specifically, each compute device is connected to the network through a communication interface in the compute device. In this type of possible implementation, a memory 1306 in a compute device 1300C stores instructions used for performing functions of a conference controller (for example, a communication module 3021). In addition, a memory 1306 in a compute device 1300D stores instructions used for performing functions of a conference server (for example, a communication module 3011, a determining module 3012, and a processing module 3013).

A connection manner between compute device clusters shown in FIG. 16 may be based on a fact that a conference control method provided in this application is applied to the conference control system 30, and the conference control system 30 includes the conference controller and the conference server. Therefore, it is considered that functions implemented by the communication module 3021 are performed by the compute device 1300C, and functions implemented by the communication module 3011, the determining module 3012, and the processing module 3013 are performed by the compute device 1300D. It should be understood that functions of the compute device 1300C shown in FIG. 16 may alternatively be completed by a plurality of compute devices 1300. Similarly, functions of the compute device 1300D may alternatively be completed by the plurality of compute devices 1300.

An embodiment of this application further provides a computer-readable storage medium. The computer-readable storage medium may be any usable medium that can be stored by a compute device, or a data storage device, like a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the compute device to perform the foregoing conference control method applied to the conference control system.

An embodiment of this application further provides a computer program product including instructions. The computer program product may be software or a program product that includes instructions and that can run on a compute device or can be stored in any usable medium. When the computer program product runs on at least one compute device, the at least one compute device is enabled to perform the foregoing conference control method.

Finally, it should be noted that the foregoing embodiments are merely intended for describing the technical solutions of the present invention other than limiting the present invention. Although the present invention is described in detail with reference to the foregoing embodiments, a person of ordinary skill in the art should understand that modifications may still be made to the technical solutions described in the foregoing embodiments or equivalent replacements may still be made to some technical features thereof, without departing from the protection scope of the technical solutions of embodiments of the present invention.

## Claims

1. A conference control method, applied to a conference control system, wherein the conference control system comprises a conference server and a conference controller, and the method comprises:
receiving, by the conference server, a conference control request sent by the conference controller, wherein the conference control request is used to request to execute a target instruction related to a video conference;
determining, by the conference server, at least one hard terminal that has a pairing relationship with the conference controller, wherein the hard terminal is configured to implement a hardware video conference based on an embedded architecture; and
processing, by the conference server, the conference control request, to control the at least one hard terminal to execute the target instruction.

2. The method according to claim 1, wherein the conference controller presents at least one instruction control, and receiving, by the conference server, the conference control request sent by the conference controller comprises:
in response to a trigger operation performed on a target control in the at least one instruction control, sending, by the conference controller, a conference control request corresponding to the target control; and
receiving, by the conference server, the conference control request.

3. The method according to claim 1 or 2, wherein the pairing relationship between the conference controller and the hard terminal is established according to the following steps:
generating, by the conference server, first pairing information of the hard terminal;
receiving, by the conference server, a pairing request sent by the conference controller, wherein the pairing request carries second pairing information; and
in response to the first pairing information being the same as the second pairing information, establishing, by the conference server, the pairing relationship between the conference controller and the hard terminal.

4. The method according to claim 3, wherein after establishing the pairing relationship between the conference controller and the hard terminal, the method further comprises:
receiving, by the conference server, a conference information subscription request sent by the conference controller; and
establishing, by the conference server, a conference information subscription link with the conference controller based on the pairing relationship between the conference controller and the hard terminal, wherein the conference information subscription link is used to transmit conference information of the hard terminal.

5. The method according to claim 4, wherein the method further comprises:
Sending, by the conference server, the conference information of the hard terminal to the conference controller through the conference information subscription link; or
in response to a change of the conference information of the hard terminal, updating, by the conference server, the conference information of the hard terminal to the conference controller through the conference information subscription link.

6. The method according to any one of claims 1 to 5, wherein the conference control request is used to request to join the video conference, and processing, by the conference server, the conference control request, to control the at least one hard terminal to execute the target instruction comprises:
generating, by the conference server, a conference joining request for the at least one hard terminal; and
establishing, by the conference server, a control link with the conference controller in response to the conference server receiving a conference joining response from the at least one hard terminal, wherein the control link is used to control the at least one hard terminal to execute the target instruction in a video conference process.

7. The method according to claim 6, wherein before the establishing, by the conference server, the control link with the conference controller in response to the conference server receiving the conference joining response from the at least one hard terminal, the method further comprises:
generating, by the at least one hard terminal, the conference joining response through a connector; or
forwarding, by the conference server, the conference joining request for the at least one hard terminal to the at least one hard terminal through an access gateway, and in response to the at least one hard terminal answering the conference joining request, generating, by the at least one hard terminal, the conference joining response.

8. The method according to any one of claims 1 to 7, wherein the conference control request is used to request to share a screen in the video conference, and processing, by the conference server, the conference control request, to control the at least one hard terminal to execute the target instruction comprises:
generating, by the conference server, first screen sharing information corresponding to the at least one hard terminal, and sending the first screen sharing information to the conference controller, to enable the conference controller to present the first screen sharing information;
receiving, by the conference server, second screen sharing information sent by a conference client, and in response to the first screen sharing information being the same as the second screen sharing information, establishing, by the conference server, a shared link with the conference client, wherein the conference client is deployed on a device of a conference participant in the video conference; and
receiving, by the conference server, a data stream sent by the conference client through the shared link, and sending the data stream to the at least one hard terminal, to enable the at least one hard terminal to play the data stream.

9. A conference control system, wherein the system comprises:
a conference controller, configured to send a conference control request, wherein the conference control request is used to request to execute a target instruction related to a video conference; and
a conference server, configured to: receive the conference control request, and determine at least one hard terminal that has a pairing relationship with the conference controller, wherein the hard terminal is configured to implement a hardware video conference based on an embedded architecture; and
the conference server is further configured to process the conference control request, to control the at least one hard terminal to execute the target instruction.

10. The system according to claim 9, wherein the conference controller presents at least one instruction control, and the conference controller is specifically configured to:
in response to a trigger operation performed on a target control in the at least one instruction control, send a conference control request corresponding to the target control.

11. The system according to claim 9 or 10, wherein the conference server is further configured to:
generate first pairing information of the hard terminal;
receive a pairing request sent by the conference controller, wherein the pairing request carries second pairing information; and
in response to the first pairing information being the same as the second pairing information, establish the pairing relationship between the conference controller and the hard terminal.

12. The system according to claim 11, wherein the conference server is further configured to:
receive a conference information subscription request sent by the conference controller; and
establish a conference information subscription link with the conference controller based on the pairing relationship between the conference controller and the hard terminal, wherein the conference information subscription link is used to transmit conference information of the hard terminal.

13. The system according to claim 12, wherein the conference server is further configured to:
send the conference information of the hard terminal to the conference controller through the conference information subscription link; or
in response to a change of the conference information of the hard terminal, update the conference information of the hard terminal to the conference controller through the conference information subscription link.

14. The system according to any one of claims 9 to 13, wherein the conference control request is used to request to join the video conference, and the conference server is specifically configured to:
generate a conference joining request for the at least one hard terminal; and
establish a control link with the conference controller in response to receiving a conference joining response from the at least one hard terminal, wherein the control link is used to control the at least one hard terminal to execute the target instruction in a video conference process.

15. The system according to claim 14, wherein the at least one hard terminal is further configured to:
generate the conference joining response through a connector; or
generate the conference joining response in response to the at least one hard terminal answering the conference joining request, wherein the conference server forwards the conference joining request for the at least one hard terminal to the at least one hard terminal through an access gateway.

16. The system according to any one of claims 9 to 15, wherein the conference control request is used to request to share a screen in the video conference, and the conference server is specifically configured to:
generate first screen sharing information corresponding to the at least one hard terminal, and send the first screen sharing information to the conference controller, to enable the conference controller to present the first screen sharing information;
receive second screen sharing information sent by a conference client, and in response to the first screen sharing information being the same as the second screen sharing information, establish a shared link with the conference client, wherein the conference client is deployed on a device of a conference participant in the video conference; and
receive a data stream sent by the conference client through the shared link, and send the data stream to the at least one hard terminal, to enable the at least one hard terminal to play the data stream.

17. A compute device cluster, wherein the compute device cluster comprises at least one compute device, the at least one compute device comprises at least one processor and at least one memory, the at least one memory stores computer-readable instructions, and the at least one processor executes the computer-readable instructions, to enable the compute device cluster to perform the method according to any one of claims 1 to 8.

18. A computer-readable storage medium, comprising computer-readable instructions, wherein the computer-readable instructions are used to implement the method according to any one of claims 1 to 8.

19. A computer program product, comprising computer-readable instructions, wherein the computer-readable instructions are used to implement the method according to any one of claims 1 to 8.
